# EUROPEAN PATENT APPLICATION

(11) **EP 4 043 960 A1**
(43) Date of publication of application: **17.08.2022**
(21) Application number: 21156530.4
(22) Date of filing: 11.02.2021
(51) Int. Cl.: G03B 21/54

(54) **A PROTECTION COVER ARRANGEMENT FOR A PROJECTOR**

(71) Applicant: Artome Oy, 19110 Vierumäki (FI)
(72) Inventor: Hautala, Joel, 19110 Vierumäki (FI); Parikka, Toni, 19110 Vierumäki (FI); Marttinen, Riku, 19110 Vierumäki (FI)
(74) Representative: Papula Oy

(57) **Abstract**

A protecting cover arrangement (1) for a projector (200) having a projecting structure (201), such as a lens and/or mirror system, extending from a projector top (202), the arrangement comprising a first portion (2), having a top wall (3), a first side wall (4) extending from the top wall (3), a second side wall (5) extending from the top wall (3), and at a distance from the first side wall (4), a front wall (6) and a back wall (7) defining together a first cover space (8) for receiving the projector (200). A space portion (9) configured to receive the projecting structure (201) extending from the projector top is arranged in an upper part of the first cover space (8), wherein arrangement comprises an opening (12) through the front wall (6) from the space portion (9) configured to receive the projecting structure (201) extending from the projector top (202); and corresponding movable projector cabinet (100).

## Description

### FIELD OF THE INVENTION

The invention relates to a protection cover arrangement for a projector. The invention relates also to a projector cabinet.

### BACKGROUND OF THE INVENTION

A projector that display images by projecting projection light onto a screen or a wall or other reflective surface are generally known and widely used.

Conventionally projectors have been assembled as a fixed installation in various operation sites. This means a lot of installation work at the operation site. The fixed installation means that a certain space at the installation site is always reserved for the projector and audio devices. Also, a design, cabling and installation of audiovisual technology may be challenging, especially in large event spaces. There is a need for more flexible use of the projector in several different places of an operation site.

Even movable projectors and other related equipment need installation and set-up work before the projector and related equipment are ready for use. This takes time and often expert knowledge is needed for a user. Furthermore, there is a risk of damaging projector and related AV equipment during moving them from a storage to an operation site.

Projector types have been developed during recent years. One interesting type of a projector is projector in which at least a part of its projecting structures, for example lens and mirror systems, may have been arranged to extend on a top of the projector. One of these kind of projector types is so called short throw or ultra-short throw (UST) projector. Using special lenses and mirrors, an ultra-short throw projector can create a very large image on a screen or wall from a very short distance. Unlike most projectors, which need to be about an inch (2,5 cm) away from the wall for every inch (2,5 cm) of diagonal screen size they project, a UST projector can sit up against (or within 3 to 4 inches (7,5 to 10 cm) of) the wall and still project a large image. Throw ratio for an UST projector may be, for example 0,18 to 0,4. Throw ratio is the relation between the throw distance (the distance between the projector's lens and the projected image) and the width of the projected image. Ultra-short throw technology may thus allow the projector to be mounted only a short distance away from a projecting screen, a wall or other reflective surface. This is particularly beneficial in smaller room spaces. Ultra-short throw projectors do not need as much space as traditional projectors, which makes it easy to create large, impactful screens in even the small room spaces. Another benefit is that the ultra-short throw projector virtually eliminates the problem of shadows on the screen, which makes it much easier to interact with the projection. In addition of the ultra-short throw projectors there are lens systems that are intended to convert regular projectors to ultra-short throw projectors. In these converted ultra-short throw projector systems lens structures may extend on top of the projector.

A projector structure in which the lens and/or mirror system or its part may extend on a top of the projector and may increase a risk of damaging the projecting structure of the projector during its use or during moving the projector to the operation site.

A projector cabinet or a stand is known for accommodating a projector that projects an image on a screen or the like. In known solutions the projector is often placed on top of the cabinet or the stand for use, and there is a risk of dust adhering or theft when not in use. In some other solutions, when the projector is not in use, the projector can be stored inside the cabinet. However, the cabinet has a drawback that the operation is complicated because the projector must be moved from inside the cabinet to the top of the cabinet when the projector is set for use. There is often a need of space on the top of the cabinet for a device, like a computer, a laptop computer, tablet, media player etc., needed as an input device to the projector and audio devices.

A cooling of the projector is also an important factor. This has often substantially limited placing of the projector in the cabinet.

### OBJECTIVE OF THE INVENTION

The objective of the invention is to alleviate the disadvantages mentioned above.

### SUMMARY

The present invention provides a protecting cover arrangement for a projector having a projecting structure, such as a lens and/or mirror system, extending from a projector top. According to a first aspect, the arrangement comprising a first portion, having a top wall, a first side wall extending from the top wall, a second side wall extending from the top wall, and at a distance from the first side wall, a front wall and a back wall defining together a first cover space for receiving the projector. According to the invention a space portion configured to receive the projecting structure extending from the projector top is arranged in an upper part of the first cover space, wherein arrangement comprises an opening through the front wall from the space portion configured to receive the projecting structure extending from the projector top.

The technical effect is that by arranging a cover space for receiving the projector and having a space portion configured to receive the projecting structure extending from the projector top an efficient cover is achieved to the special type of a projector. Furthermore, by arranging an opening through the front wall from the space portion configured to receive the projecting structure extending from the projector top a feasible solution for the projector cover is achieved in which the projector does not need to be removed for the use.

The protecting cover arrangement is characterized by what is stated in the independent claims. Some other embodiments are characterized by what is stated in the other claims. In an embodiment of the protecting cover arrangement the arrangement may comprise a second portion comprising a lower top wall extending from the front wall of the first portion and at a distance from the top wall of the first portion and defining below the lower top wall a second cover space that connect with the first cover space, wherein the first cover space and second cover space may form an integrated cover space and having the space portion formed in the upper part on the first cover space. This makes the structure of the upper part form a step-like structure, which is feasible for a use of material, and it gives a good protective cover for the projector and its projector structure extending the top of the projector. The integrated lower cover space is large in its dimensions (width and length) and may be suitable to receive a main body portion of the projector. The upper portion of the cover space may be smaller of its dimensions (width and length) and is suitable to receive the projecting structure extending from the projector top i.e. from the top of the projector main body. In addition, the projecting cover arrangement may be arranged on or combined with a piece of furniture.

In an embodiment of the protecting cover arrangement the opening may be arranged on the front wall of the first portion between the top wall of the first portion and the lower top wall of the second portion. With an opening arranged on the front wall of the first portion between the top wall of the first portion and the lower top wall of the second portion a good protection for the projecting structured i.e. for a lens and mirror system of the projector may be achieved and simultaneously without losing the possibility to efficiently project an image through the opening. The opening is suitable for the projector and makes it possible to position the arrangement near a screen and at the same time maintain a possibility to a relatively large projected image size, and especially a projected image height, on the screen. In some embodiments the projector may be provided with a camera directed to the screen. The opening in the cover arrangement may be suitable for use of a camera through the opening, for example for a use with an interactive screen.

In an embodiment of the protecting cover arrangement a first enclosure may be arranged extending from the first side wall towards the space portion and extending from the top wall a distance in the first cover space and/or a second enclosure may be arranged extending from the second side wall towards the space portion and extending from the top wall a distance in the first cover space, wherein the space portion may be formed between the first enclosure and the second enclosure. By arranging the first enclosure and/or the second enclosure to the arrangement a stiffening, box-like structure for the arrangement may be achieved. Simultaneously a good protection for the space portion configured to receive the projecting structure extending from the projector top is achieved.

In an embodiment of the protecting cover arrangement the first enclosure may be formed from a portion of the top wall, a portion of the first side wall, a first support wall, a first partition wall, and a first enclosure front wall and a first enclosure back wall. By arranging the first enclosure to a corner area between the top wall and the first side wall a firm box-like structure for the arrangement is achieved.

In an embodiment of the protecting cover arrangement the second enclosure may be formed from a portion of the top wall, a portion the second side wall, a second support wall, a second partition wall and a second enclosure front wall and a second enclosure back wall. By arranging the second enclosure to a corner area between the top wall and the second side wall a firm box-like structure for the arrangement is achieved.

In an embodiment of the protecting cover arrangement the first partition wall of the first enclosure is adjacent to the space portion and arranged extending from the first support wall to the top wall and the second partition wall of the second enclosure is adjacent to the space portion and arranged extending from a second support surface to the top wall, wherein the first partition wall and the second partition wall are at a distance from each other, so that the space portion is formed between them. By this wall arrangement a firm box-like structure for the enclosure may be achieved that gives a good protection for the projector.

In an embodiment of the protecting cover arrangement a loudspeaker may be arranged to the first enclosure and/or to the second enclosure. By arranging the loudspeaker to the first enclosure and/or to the second enclosure a good structure for producing sound is achieved and simultaneously the construction is feasible for the arrangement. By the enclosure at least partly formed by the top wall and the first and/or second side wall a firm structure for the speaker enclosure is achieved.

In an embodiment of the protecting cover arrangement a curved transition zone may be arranged to the top wall or the lower top wall and/or to the first side wall and/or to the second side wall on a corner area between the top wall or the lower top wall and the first side wall and/or a corner area between the top wall or the lower top wall and the second side wall. By arranging a curved form on the corner areas, a structurally durable firm structure may be achieved, and simultaneously a safety of the arrangement may be enhanced by reducing a number of sharp corners of the arrangement.

In an embodiment of the protecting cover arrangement a recess or a plurality of recesses may be formed on the top wall and/or the first side wall and/or the second side wall for receiving an end of at least one wall or ends of a plurality of walls for connecting and for forming the first enclosure and/or the second enclosure. The wall ends may be arranged to the recess or a groove that makes a joint more rigid and structurally sound. The structure is also space saving. It also gives suitable structure for the speaker enclosures. It may help to make enclosures well sealed for a speaker use, so that use of a sealing material and sealing work may be minimized.

In an embodiment of the protecting cover arrangement an operation panel, optionally comprising a camera, may be arranged to an upper part of the arrangement, for example to the top wall. This makes it easy to use for the operator. By arranging a camera to the arrangement, the arrangement may be used also in webinars, video calls and other suitable uses. The arrangement is a compact solution for protecting the projector, for producing good quality audio and imaging device i.e. camera for providing video. Arranging the camera in the operation panel a suitable module for assembling is achieved. This arrangement also makes a good cable management possible e.g. by providing suitable space for various cables and connections inside the cover arrangement.

In an embodiment of the protecting cover arrangement the operation panel may be arranged on the top wall aligned with the space portion and onto an opposite side of the top wall in relation to the space portion. This central arrangement of the operation panel makes it easy to use for the operator. There are suitable worktops on the top wall on both sides of the operation panel.

In an embodiment of the protecting cover arrangement the at least one loudspeaker may be operationally arranged to direct its sound on the back-wall side of the first portion. The arrangement may be arranged in front of an audience and the at least one loudspeaker is directed towards the audience.

In an embodiment of the protecting cover arrangement at least one fan may be arranged in the arrangement and configured to bring air into the cover space and/or draw air from the cover space below the lower top wall i.e. into the projector space via openings arranged on the first side wall and/or the second side wall of the arrangement for cooling the cover space. By arranging at least one fan and circulating air through the projector space via openings for removing warm air from the projector space and/or for bringing cool air into the projector space an efficient cooling air flow is provided in the projector space.

In an embodiment of the protecting cover arrangement the transition zone between the top wall and first side wall and/or second sidewall of the arrangement may comprise a bent plywood board structure. The bent plywood board structure is suitable and durable solution for the transition zone between the top wall and the first side wall and/or second side wall.

According to a second aspect, the arrangement may be arranged on or combined with a piece of furniture. According to the second aspect the invention relates to a movable projector cabinet comprising a base, a plurality of castors, a first side wall extending from the base, a second sidewall extending from the base, and at a distance from the first side wall, a front wall and back wall defining together a cabinet space.

According to the invention the movable projector cabinet may comprise the protecting cover arrangement according to any one of the embodiments mentioned above or below and arranged on an upper part of the cabinet.

The technical effect is that by arranging a projector space inside the cabinet an efficient solution for movable projector cabinet is achieved. Combined with a suitable projector the movable projector cabinet is a factory-made solution, which eliminates the design, cabling, and installation of audiovisual technology. With a movable projector cabinet having an AV system and a projector reduces the total cost of construction because the installation of AV technology in the operation site is eliminated, and the design of AV does not require special expertise.

The movable projector cabinet is characterized by what is stated in the independent claims.

Some other embodiments are characterized by what is stated in the other claims.

In an embodiment of the movable projector cabinet the cabinet may further comprise at least one speaker and connecting means for connecting the projector or other audio source device to the at least one speaker. A speaker arranged in the cabinet makes the cabinet a compact AV solution and ready to use without an external speaker system.

In an embodiment of the movable projector cabinet a projector support plate may be arranged at a distance from the upper part of the cabinet defining a lower wall of the projector space.

In an embodiment of the movable projector cabinet a handle opening may be arranged in each of the side walls and providing a channel for air form outside of the projector cabinet to the projector space.

In an embodiment of the movable projector cabinet a connection panel may be arranged in the projector cabinet.

In an embodiment of the movable projector cabinet the arrangement may comprise a projector having a projecting structure, such as a lens and/or mirror system, extending from a projector top.

In an embodiment of the movable projector cabinet the at least one speaker may be arranged on a back-wall side of the cabinet. The movable projector cabinet may be arranged in front of an audience and the speakers are directed towards the audience.

In an embodiment of the movable projector cabinet at least one fan may be arranged in the cabinet and configured to bring air into the projector space via openings arranged on the side wall of the cabinet for cooling the projector space and exhaust the air from the projector space. By arranging at least one fan and circulating air through the projector space via openings an efficient cooling air flow is provided in the projector space.

In an embodiment of the movable projector cabinet the fan may be arranged to draw air from the projector space and blow the air outside the cabinet. It is efficient to bring an under pressure (partial vacuum) in the projector space by a fan by drawing the cooling air through openings to the projector space and by blowing the warm air from the space.

In an embodiment of the movable projector cabinet a handle opening may be arranged in each of the side walls and providing a channel for air form outside of the projector cabinet to the projector space. The handle openings may be used for gripping points when moving the movable projector cabinet and during the operation of the projector they may bring extra cooling air to the projector space.

In an embodiment of the movable projector cabinet an operation panel may be arranged to an upper part of the cabinet. This makes it easy to use for the operator.

In an embodiment of the movable projector cabinet a connection panel may be arranged in the projector cabinet. In an embodiment some of the common connections may be arranged to the operation panel and some of connections to the connection panel arranged in a technical space of the movable projector cabinet.

In an embodiment of the movable projector cabinet the projector space of the projector cabinet may be configured to receive a laser projector.

The arrangement and the movable projector cabinet and its projector space may be suitable projectors that can produce large images to the screen form short or ultra-short distances. Built-in sound system produces sufficient sound pressure for hundreds of people. The projector cabinet and the arrangement are also compatible with external sound systems.

In an embodiment the arrangement and the movable projector cabinet are designed for users with no technical background. In an embodiment the projector and AV system starts at the touch of a button and the operation panel contains only the most common operation buttons. A source device, such as a laptop computer or mobile device, may be connected with a cable or wirelessly to the arrangement of the projector cabinet.

Inventive embodiments are also disclosed in the specification and drawings of this patent application.

The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

It is to be understood that the aspects and embodiments of the invention described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** is a schematic representation of a front view of an embodiment of a protection cover arrangement, on a projector that is showed by dotted lines,
**Figure 2** is a schematic representation of a back view of an embodiment of a protection cover arrangement, back-wall removed,
**Figure 3** is a schematic representation of a perspective view of an embodiment of a protection cover arrangement from a first direction, on a projector,
**Figure 4** is a schematic representation of a perspective view of an embodiment of a protection cover arrangement from a second direction, on a projector,
**Figure 5** is a schematic representation of a cross section V-V from the figure 6 of an embodiment of a protection cover arrangement,
**Figure 6** is a schematic representation of a cross section VI-VI from the figure 5 of an embodiment of a protection cover arrangement,
**Figure 7** is a schematic representation of a perspective view of an embodiment of a protection cover arrangement from a first direction,
**Figure 8** is a schematic representation of a perspective view of an embodiment of a protection cover arrangement from a second direction,
**Figure 9** is a schematic representation of an exploded view an embodiment of a protection cover arrangement,
**Figure 10** is a schematic representation of a perspective view of an embodiment of a movable projector cabinet from a first direction,
**Figure 11** is a schematic representation of a perspective view of an embodiment of a movable projector cabinet from a second direction, and
**Figure 12** is a schematic representation of a perspective view of an embodiment of a movable projector cabinet from a second direction and bask wall opened.

In the figures, some embodiments are shown simplified for the sake of clarity. Similar parts are marked with the same reference numbers in the figures.

### DETAILED DESCRIPTION

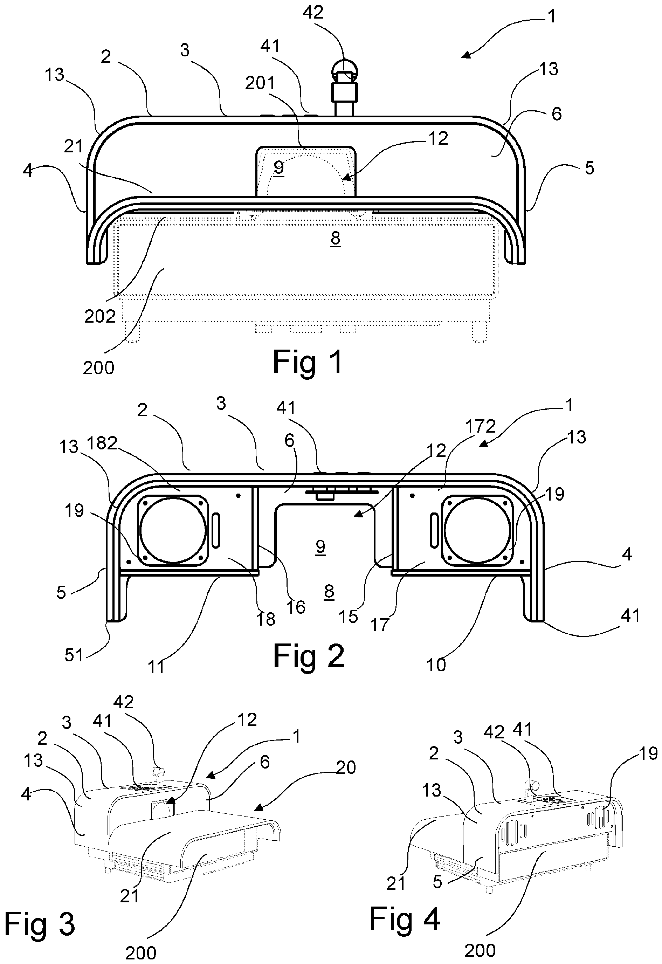

A diagrammatic illustration of an embodiment of a protecting cover arrangement 1 is depicted in figures 1 to 4.
1. In an embodiment of a protecting cover arrangement 1 for a projector 200 that may have a projecting structure 201, such as a lens and/or mirror system, extending from a projector top 202. The projector may not be part of the invention. The projector is illustrated with dashed lines in figure 1. The protecting cover arrangement 1 may comprise a first portion 2. The first portion 2 may comprise a top wall 3. A first side wall 4 may extend downwards from the top wall 3. A second side wall 5 may extend downwards from the top wall 3, and at a distance from the first side wall 4. The first portion 2 may further comprise a front wall 6 extending downwards from the top wall 3 between the first side wall 4 and the second side wall 5. The first portion 2 may further comprise a back wall 7 extending downwards from the top wall 3 between the first side wall 4 and the second side wall 5, and a distance from the front wall. The top wall 3, the first side wall 4, the second side wall 5 and the front wall 6 and the back wall 7 may define together a first cover space 8. The first cover space 8 may be configured for receiving the projector 200. A space portion 9 may be arranged to in an upper part of the first cover space 8. The space portion 9 may be configured to receive the projecting structure 201 that may extend from the projector top 202. The arrangement may comprise an opening 12 through the front wall 6 from the space portion 9 to outside of the arrangement. In an embodiment the arrangement may comprise an opening 12 through the front wall 6 from the space portion 9 configured to receive the projecting structure 201 extending from the projector top 202 to outside of the arrangement.

In an embodiment the arrangement may comprise a second portion 20 comprising a lower top wall 21. The lower top wall 21 may extend from the front wall 6 of the first portion 2. The lower top wall 21 may be arranged at a distance downwards from the top wall 3 of the first portion 2. The second portion 2 may define below the lower top wall 21 a second cover space that connect with the first cover space 8. In an embodiment the first cover space 8 and second cover space form an integrated cover space and may have the space portion 9 formed in the upper part on the first cover space 8.

In an embodiment the opening 12 is arranged on the front wall 6 of the first portion 2 between the top wall 3 of the first portion and the lower top wall 21 of the second portion 20. In an embodiment the opening may extend from a plane of the lower top wall 21 a distance perpendicular upwards i.e. towards the top wall 3 of the arrangement. A shape of the opening 12 may be substantially rectangular. A shape of the opening may be may circular. In an embodiment the opening may be made by a cut from a lower side of the front wall a distance upwards. In an embodiment a shape of the opening 12 may be varied. Also, a size of the opening may differ according to embodiments. In an embodiment the opening may be unsymmetrically arranged on the front wall 6. In an embodiment there may be arranged a plurality of openings 12 on the front wall.

In an embodiment of the arrangement the first side wall 4 and/or the second side 5 wall may extend form the top wall 3 to a distance downwards. The distance may be varied according to the embodiment. In figures 1 to 4 the side walls may extend downwards from the top wall a distance that may be a part of a height of the projector 200. In that embodiment the projector may be partly covered by the arrangement 1.

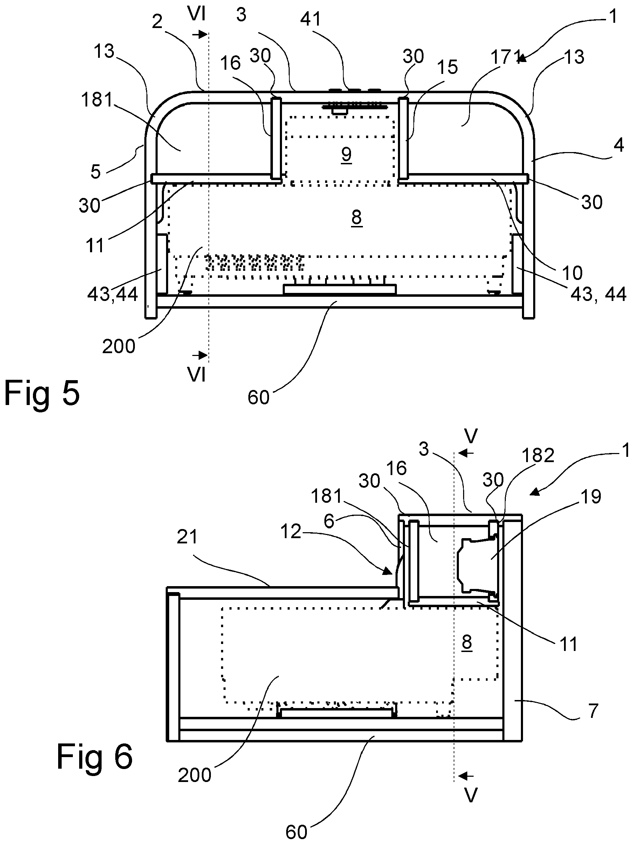

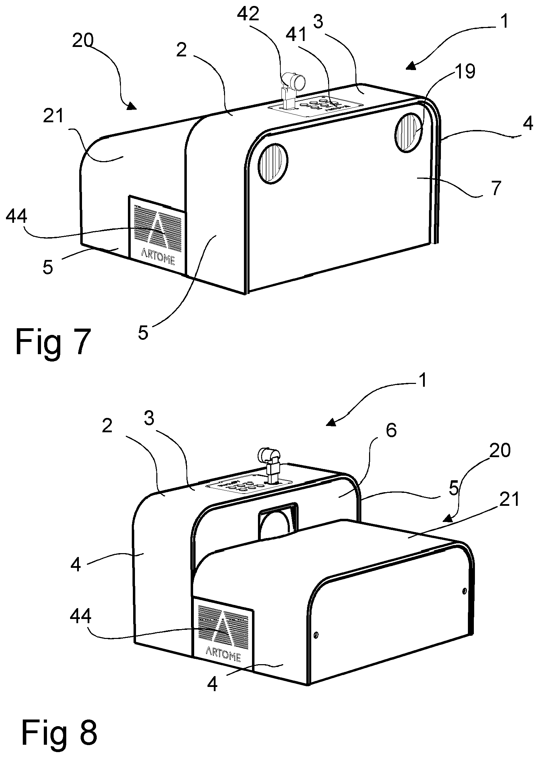

In an embodiment of figures 5 to 9 the first side wall 4 and the second side wall 5 extend downwards from the top wall 3 to a projector support plate 60. In that embodiment the projector may be totally covered by the arrangement 1. Lower end of the side walls 4, 5 of the cover arrangement may be arranged to the support plate 60. In an embodiment the support plate is arranged to the side walls by fixing means.

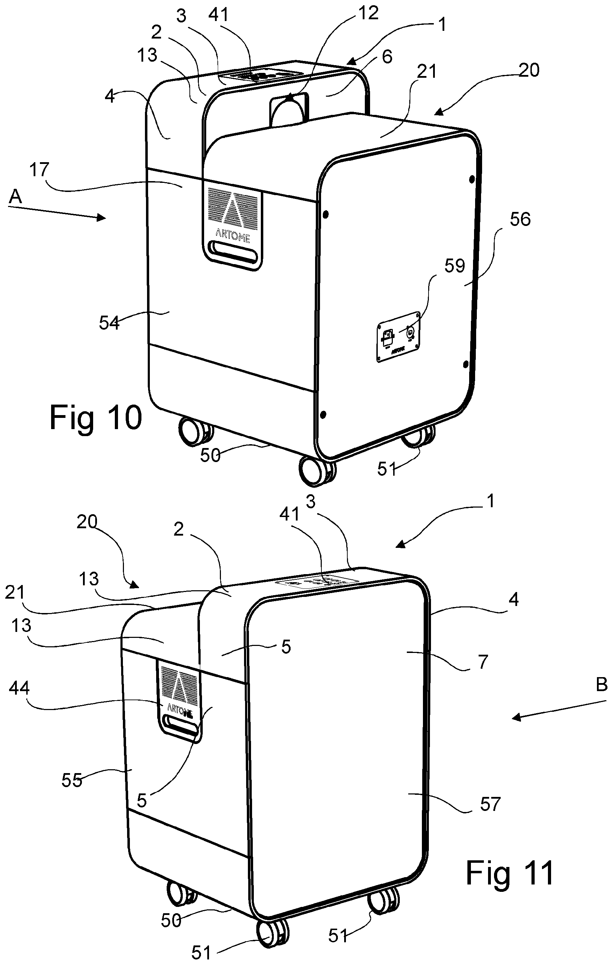

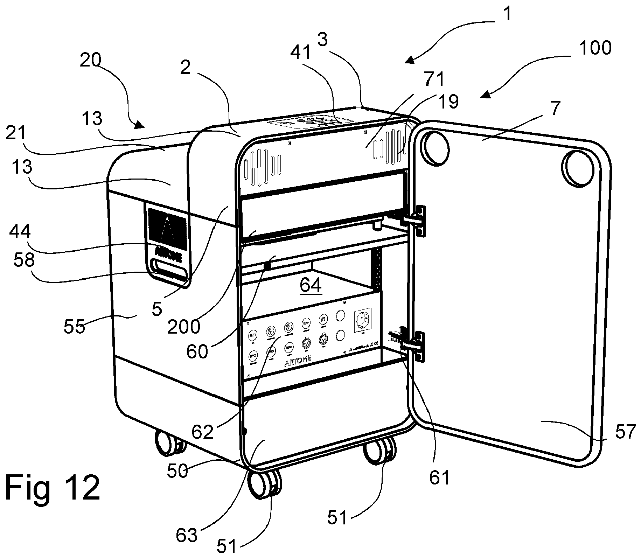

In an embodiment of figures 10 to 12 the first and second side wall may be connected to a first side wall 54 and second side wall 55 of the projector cabinet 100.

In an embodiment a first enclosure 17 may be arranged extending from the first side wall 4 towards the space portion 9 and extending from the top wall 3 a distance in the first cover space 8. In an embodiment a second enclosure 18 may be arranged extending from the second side wall 5 towards the space portion 9 and extending from the top wall 3 a distance in the first cover space 8. In an embodiment the space portion 9 may be formed between the first enclosure 17 and the second enclosure 18.

In an embodiment the first enclosure 17 may be formed from a portion of the top wall 3, a portion of the first side wall 4, a first support wall 10, a first partition wall 15, and a first enclosure front wall 171 and a first enclosure back wall 172.

In an embodiment the second enclosure 18 is formed from a portion of the top wall 3, a portion the second side wall 5, a second support wall 11, a second partition wall 16 and a second enclosure front wall 181 and a second enclosure back wall 182.

In an embodiment the first partition wall 15 of the first enclosure may be adjacent to the space portion 9. The first partition wall 15 may be arranged extending from the first support wall 10 to the top wall 3. In an embodiment the second partition wall 16 of the second enclosure 18 may be adjacent to the space portion 9. The second partition wall 16 may be arranged extending from a second support surface 11 to the top wall 3. In an embodiment the first partition wall 15 and the second partition 16 wall may be arranged at a distance from each other, so that the space portion 9 may be formed between them.

In an embodiment a loudspeaker 19 may be arranged to the first enclosure 17 and/or to the second enclosure 18. In an embodiment a loudspeaker 19 may be arranged to first enclosure back wall 172 and/or to a second enclosure back wall 182.

In an embodiment of the arrangement at least one loudspeaker 19 is operationally arranged to direct its sound on the back wall 7 side of the first portion.

In an embodiment a curved transition zone 13 may be arranged between the top wall 3 and first side wall 4 and/or second sidewall 5. In an embodiment a curved transition zone is arranged on a corner area between the top wall 3 and first side wall 4 and/or second sidewall 5.

In an embodiment a curved transition zone 13 is arranged on a corner area between the lower top wall 21 and first side wall 4 and/or second sidewall 5.

In an embodiment a curved transition zone 13 to the top wall 3 or the lower top wall 21 and/or to the first side wall 4 and/or to the second side wall 5 on a corner area between the top wall 3 or the lower top wall 21 and the first side wall 4 and/or a corner area between the top wall 3 or the lower top wall 21 and the second side wall 5.

In an embodiment a recess 30 or a plurality of recesses 30 may be formed on the top wall 3 and/or the first side wall 4 and/or the second side wall 5 for receiving an end of at least one wall or ends of a plurality of walls 10, 11, 15, 16, 171, 172, 181, 182 for connecting and for forming the first enclosure 17 and/or the second enclosure 18. Recesses 30 are illustrated with embodiments in figures 5, 6 and 9, but they may be applied also with other embodiments. In an embodiment joints between walls may be made by inserting an end of the wall 10, 11, 15, 16, 171, 172, 181, 182 to the recess 30. In an embodiment binding agent, such as glue may be used when forming joints. In addition to or instead of fastening members, or nails or screws may be used in joints.

In an embodiment an operation panel 41, optionally comprising a camera 42, may be arranged to an upper part of the arrangement 1, for example to the top wall 3. In an embodiment the camera 42 may be removable. In an embodiment the camera 42 may be adjustable. By arranging a camera to the arrangement, the arrangement may be used also in webinars, video calls and other suitable uses. Arranging the camera 42 in the operation panel 41 a suitable module for assembling is achieved.

In an embodiment the operation panel 41 may be arranged on the upper part of the arrangement. In an embodiment the operation panel 41 may be arranged on the top wall 3 of the arrangement 1. In an embodiment the operation panel may be embedded to the top wall of the upper part of the arrangement. In an embodiment a front surface of the operation panel 41 may be embedded at a distance inwards from a plane of the top wall 3 of the upper part of the arrangement. The operation panel may comprise at least one or more of the following: on-off switch, volume up/down button(s), video signal in, HDMI, Mic/Line in, SPDIF in/out, several programmable user buttons, for example source, freeze, mute, pause. The operation panel may have power outlet.

In an embodiment the operation panel 41 may be arranged on the top wall 3 aligned with the space portion 9 and onto an opposite side of the top wall in relation to the space portion 9.

In an embodiment at least one fan 43 may be arranged in the arrangement. The fan 43 may be configured to bring air into the cover space 8 below the lower top wall 21 i.e. into the projector space via openings 44 arranged on the first side wall 4 and/or the second side wall 5 of the arrangement for cooling the cover space 8.

In an embodiment the transition zone 13 between the top wall 3 and first side wall 4 and/or second sidewall 5 of the arrangement may comprise a bent plywood board structure. In an embodiment the top wall and and/or the first side wall 4 and/or the second side wall 5 may comprise a plywood structure.

A diagrammatic illustration of an embodiment of the arrangement with a projector cabinet is depicted in figures 10 to 12. The projector cabinet 100 includes a base 50. In an embodiment the base 50 may be a base board-like member. Casters 51 may be arranged at the bottom surface of the base 50. The projector cabinet may be moved on a support surface on casters in left-right, front-rear, and diagonal directions and also turned in all directions of 360 degrees. In an embodiment the casters 51 may be provided at four corners on the bottom surface of the base 50. The casters 51 make it possible to move the cabinet 100 together with the projector 200.

A brake may be provided on the casters 50. The brake may prevent the cabinet 100 from moving when needed, for example when the projector 200 is in use.

The movable projector cabinet 100 may comprise the protecting cover arrangement 1 arranged on an upper part of the cabinet.

In an embodiment the cabinet 100 may comprise a first side wall 4, 54 perpendicular with the base 50 and extending upwards from the base 50. In an embodiment the cabinet 100 may comprise a second side wall 5, 55 at a distance from the first side wall 4, perpendicular with the base 50 and extending upwards from the base 50.

In an embodiment the cabinet may comprise a top wall 3, 21 at a distance from the base 50 and substantially parallel with of the base 50. In an embodiment the top wall 3, 21 may be a table board or other board-like member.

In an embodiment of the projector cabinet 100 a projector space 8,9 may be arranged in a cabinet space between the base 50 and the top wall 3, 21 and between the first side wall 4, 54 and the second side wall 5, 55. A projector support plate 60 may be arranged between the first side wall 4, 54 and the second side wall 5, 55 and at a distance from the upper surface of the base 50. The projector 200 may be arranged on the projector support plate 60 so that projecting structure 201, i.e. part of the lens and/or mirror system, extending from the top 200 of the projector 200 may be received in the upper portion 9 of the projector cover space 8. The projecting of the image may be achieved through the opening 12 of the front wall 6 from the space portion 9. The space portion 9 may be configured to receive the projecting structure 201 extending from the projector top 202.

In an embodiment the projector space 8 may be defined by an upper surface of the projector support plate 60, a lower surface of the lower top wall 21, an inner surface of the first side wall 4, 54 and an inner surface of the second side wall 5, 55. On a front side of the projector cabinet 200 may be arranged a front wall 56. The front wall 56 may be extending between a front edge of the base 50 and a front edge of the lower top wall 21. In an embodiment the front wall 56 may be arranged to extend towards the lower top wall 21 in a perpendicular direction from the plane of the base 50. In a plane parallel of the base the front wall 56 may be extending from the first side wall 4, 54 to the second side wall 5, 55. In an embodiment the front wall 56 may have an opening 9 for a lens of the projector 10. In an embodiment the front wall 56 may comprise a connecting panel 59. The connecting panel 59 may comprise connections for external systems or for example a mains connection.

The openings 44 may be arranged from outside of the cabin to the projector space 8, 9 of the cabinet. In an embodiment the openings 44 may be in form of slots. In an embodiment the openings 44 may be arranged on the first side wall 54 and/or on the second side wall 5, 55. In an embodiment the openings 44 may be arranged as an array of slots. In an embodiment the slots may be arranged parallel to a plane of the projector support plate 60 and/or base 50 and arranged at a distance perpendicular to said plane of the projector support plate 60 and/or base 50. In an embodiment the openings may be arranged to other suitable form and pattern. In an embodiment an air filter may be arranged in connection with the openings 44. In an embodiment a mesh may be arranged in connection with the openings 44.

The projector support plate 60 may be arranged to extend from the front wall 8 towards a back wall 57 of the projector cabinet 100. In an embodiment a height of the projector cover space 8,9 may be arranged to increase at least on a portion of the distance of the projector space extending from a front wall 56 towards the back wall 57. This means that there may be arranged more free space between the projector and the upper wall (top wall) of the projector space in the portion next to the back wall than in the portion of the projector space next to the front wall.

A projector support plate 60 may be arranged at a distance from the upper part of the cabinet defining a lower wall of the projector space 8, 9.

A handle opening 58 may be arranged in each of the side walls 54, 55. The handle opening 58 may be arranged in a module with the openings 44. The module may also comprise the fan 43. The handle openings 58 may be also provide a channel for air form outside of the projector cabinet to the projector space 8.

A connection panel 59 may be arranged in the projector cabinet.

The arrangement 1 or projector cabinet 100 may comprise a projector 200 having a projecting structure 201, such as a lens and/or mirror system, extending from a projector top 202.

In an embodiment a fan 43 may be arranged to draw air from the projector space and blow the air outside the cabinet. In an embodiment the fan 43 may be arranged to blow air to the projector space from outside of the cabinet. In an embodiment an opening 44 may be arranged to the first side wall at a point of the fan 43 for conveying air from the projector space outside the projector space. In an embodiment the fan during its operation sucks air from the projector space. In an embodiment the fan blows air from outside to the projector space. In an embodiment the fan may be configured to achieve an air flow through the openings 44 to bring cooling air to the projector. In an embodiment the air may be flow through a cooling system of the projector and the air, that may be warming during a cooling phase of the projector, may be discharged to the portion of projector space next to other side wall. There the warm air flow coming from the projector may be mixed with a flow of cool air coming from handle openings 58 of the first and second side walls 4, 5.

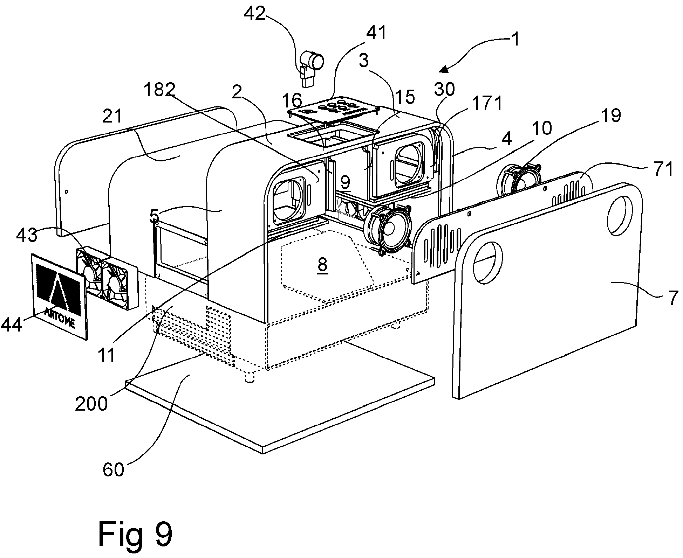

In an embodiment the arrangement may comprise a plurality of fans 43. In an embodiment of the figure 9 two fans 43 may be arranged on the side wall of the cabinet in connection with the cover space 8 i.e. projector space. In an embodiment a cover panel, a lattice, a grill, or a mesh may be arranged to the back wall and/or front wall. In an embodiment the cover, lattice, grill, or mesh may be arranged to the arrangement by a quick-release coupling. In an embodiment the quick-release coupling of the cover panel may be arranged by magnets and their counter parts.

In an embodiment an operation panel 41 may be arranged to the projector cabinet. In an embodiment the operation panel may be arranged on an upper part of the projector cabinet. In an embodiment the upper part extends at a distance perpendicular from the plan of the lower top wall 21. The upper part 1 has an upper part front wall 6 and the top wall 3. The first and second side wall may each have a top portion extending to the top wall 3 of the upper part. The back wall 7 of the arrangement or the projector cabinet may extend to the top wall 3 of the upper part. In an embodiment a pair of loudspeakers 19 may be arranged in the arrangement/ the projector cabinet. In an embodiment the loudspeaker 19 may be arranged on the back wall 7 of the projector cabinet. In an embodiment the speaker 19 or speakers may be arranged on the upper part of the projector cabinet.

In an embodiment the operation panel 41 may be arranged on the upper part of the projector cabinet. In an embodiment the operation panel 41 may be arranged on the top wall 3 of the arrangement 1 and upper part of the projector cabinet. In an embodiment the operation panel may be embedded to the top wall of the upper part of the arrangement and/or the projector cabinet. In an embodiment a front surface of the operation panel 41 may be embedded at a distance inwards from a plane of the top wall 3 of the upper part of the projector cabinet. The operation panel may comprise at least one or more of the following: on-off switch, volume up/down button(s), video signal in, HDMI, Mic/Line in, SPDIF in/out, several programmable user buttons, for example source, freeze, mute, pause. The operation panel may have power outlet.

In an embodiment a second connecting panel 62 may be arranged in the projector cabinet. In an embodiment the second connecting panel may comprise mains in connection. In an embodiment the connecting panel may further comprise other input/output connection points for power, sound, and information. In an embodiment the second connecting panel 62 may be arranged in the projector cabinet into a technical space 64. In an embodiment the technical space 64 may be arranged between the base 2 and the projector support plate 60 in the projector cabinet. In an embodiment the connecting panel may be arranged on connection rails arranged in the technical space. In an embodiment the projector cabinet 100 the back wall 57 may be arranged pivotable by hinges 61 to the first side wall 54 or to the second side wall 55. In an embodiment the back wall 57 is a door. In an embodiment an opening may be arranged on the cabinet for a power cable. In an embodiment the opening may be arranged through a base 50.

In an embodiment a further storage space may be arranged in the projector cabinet. In an embodiment a drawer 63 may be arranged in the projector cabinet.

In an embodiment partition walls may be arranged to separate the different spaces of the projector cabinet.

In the figures a cabling of different devices of the cabinet, such as the operation panel 41, the connection panel 59, the second connection panel 62, the loudspeaker 19, the projector 200 and possible other devices are not shown in the sake of clarity of the figures.

In an embodiment the projector space of the projector cabinet may be configured to receive a laser projector, preferable a laser projector with short throw or ultra-short throw. In an embodiment an image and sound can be optimized for different sized spaces. In an embodiment an AV technology of the movable projector cabinet and the projector optimized for the gym can be converted for conference use without the need for reprogramming or installation.

In an embodiment the movable projector cabinet may transform a gymnasium for festive use and a lobby as an exhibition space. The movable projector cabinet can be used for several different purposes, resulting in a high utilization rate of AV technology.

At the design phase, the light output of a laser projector can be determined according to the requirements of room brightness and image size. In an embodiment of the movable projector cabinet its sound system can be expanded to meet the needs of events by selecting appropriate connections and features for the solution.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A protecting cover arrangement (1) for a projector (200) having a projecting structure (201), such as a lens and/or mirror system, extending from a projector top (202), the arrangement comprising a first portion (2), having a top wall (3), a first side wall (4) extending from the top wall (3), a second side wall (5) extending from the top wall (3), and at a distance from the first side wall (4), a front wall (6) and a back wall (7) defining together a first cover space (8) for receiving the projector (200), wherein a space portion (9) configured to receive the projecting structure (201) extending from the projector top is arranged in an upper part of the first cover space (8), wherein arrangement comprises an opening (12) through the front wall (6) from the space portion (9) configured to receive the projecting structure (201) extending from the projector top (202).

2. The protecting cover arrangement according to claim 1, wherein the arrangement comprises a second portion (20) comprising a lower top wall (21) extending from the front wall (6) of the first portion (2) and at a distance from the top wall (3) of the first portion (2) and defining below the lower top wall a second cover space that connect with the first cover space (8), wherein the first cover space and second cover space form an integrated cover space and having the space portion (9) formed in the upper part on the first cover space.

3. The protecting cover arrangement according to claim 1 or 2, wherein the opening (12) is arranged on the front wall (6) of the first portion (2) between the top wall (3) of the first portion and the lower top wall (21) of the second portion (20).

4. The protecting cover arrangement according to any one of the claims 1 to 3, wherein a first enclosure (17) is arranged extending from the first side wall (4) towards the space portion (9) and extending from the top wall (3) a distance in the first cover space (8) and/or a second enclosure (18) is arranged extending from the second side wall (5) towards the space portion (9) and extending from the top wall (3) a distance in the first cover space (8), wherein the space portion (9) is formed between the first enclosure (17) and the second enclosure (18).

5. The protecting cover arrangement according to any one of the claims 1 to 4, wherein the first enclosure (17) is formed from a portion of the top wall (3), a portion of the first side wall (4), a first support wall (10), a first partition wall (15), and a first enclosure front wall (171) and a first enclosure back wall (172).

6. The protecting cover arrangement according to any one of the claims 1 to 5, wherein the second enclosure is formed from a portion of the top wall (3), a portion the second side wall (5), a second support wall (11), a second partition wall (16) and a second enclosure front wall (181) and a second enclosure back wall (182).

7. The protecting cover arrangement according to any one of the claims 1 to 6, wherein the first partition wall (15) of the first enclosure is adjacent to the space portion (9) and arranged extending from the first support wall (10) to the top wall (3) and the second partition wall (16) of the second enclosure is adjacent to the space portion (9) and arranged extending from a second support surface (11) to the top wall (3), wherein the first partition wall (15) and the second partition (16) wall are at a distance from each other, so that the space portion (9) is formed between them.

8. The protecting cover arrangement according to any one of the claims 1 to 7, wherein a loudspeaker (19) is arranged to the first enclosure (17) and/or to the second enclosure (18).

9. The protecting cover arrangement according to any one of the claims 1 to 8, wherein a curved transition zone (13) is arranged to the top wall (3) or the lower top wall (21) and/or to the first side wall (4) and/or to the second side wall (5) on a corner area between the top wall (3) or the lower top wall (21) and the first side wall (4) and/or a corner area between the top wall (3) or the lower top wall (21) and the second side wall (5) .

10. The protecting cover arrangement according to any one of the claims 1 to 9, wherein a recess (30) or a plurality of recesses (30) is/are formed on the top wall (3) and/or the first side wall (4) and/or the second side wall (5) for receiving an end of at least one wall or ends of a plurality of walls (10, 11, 15, 16, 171, 172, 181, 182) for connecting and for forming the first enclosure (17) and/or the second enclosure (18).

11. The protecting cover arrangement according to any one of the claims 1 to 10, wherein an operation panel (41), optionally comprising a camera (42), is arranged to an upper part of the arrangement (1), for example to the top wall (3).

12. The protecting cover arrangement according to any one of the claims 1 to 11, wherein the operation panel (41) is arranged on the top wall (3) aligned with the space portion (9) and onto an opposite side of the top wall in relation to the space portion (9).

13. The protecting cover arrangement according to any one of the claims 1 to 12, wherein the at least one loudspeaker (19) is operationally arranged to direct its sound on the back wall (7) side of the first portion.

14. The protecting cover arrangement according to any one of the claims 1 to 13, wherein at least one fan (43) is arranged in the arrangement and configured to bring air into the cover space and/or draw air from the cover space (8) below the lower top wall (21) i.e. into the projector space via openings (44) arranged on the first side wall (4, 54) and/or the second side wall (5, 55) of the arrangement for cooling the cover space (8).

15. The protecting cover arrangement according to any one of the claims 1 to 14, wherein the transition zone (13) between the top wall (3) and first side wall (4) and/or second sidewall (5) of the arrangement comprises a bent plywood board structure.

16. A movable projector cabinet comprising a base (50), a plurality of castors (51), a first side wall (54) extending from the base (50), a second sidewall (55) extending from the base (50), and at a distance from the first side wall (54), a front wall (56) and back wall (57) defining together a cabinet space, wherein the movable projector cabinet comprises a protecting cover arrangement (1) according to any one of the claims 1 to 15 arranged on an upper part of the cabinet.

17. The movable projector cabinet according to claim 16, wherein a projector support plate (60) is arranged at a distance from the upper part of the cabinet defining a lower wall of the projector space.

18. The movable projector cabinet according to claim 16 or 17, wherein a handle opening (58) is arranged in each of the side walls (54; 55), and providing a channel for air form outside of the projector cabinet to the projector space (8).

19. The movable projector cabinet according to any one of claims 16 to 18, wherein a connection panel (59) is arranged in the projector cabinet.

20. The movable projector cabinet according to any one of claims 16 to 19, wherein the arrangement comprises a projector having a projecting structure (201), such as a lens and/or mirror system, extending from a projector top (202).
